# EUROPEAN PATENT APPLICATION

(11) **EP 1 244 021 A1**
(43) Date of publication of application: **25.09.2002**
(21) Application number: 00962969.2
(22) Date of filing: 28.09.2000
(51) Int. Cl.: G06F 13/00, G06F 17/30, G06F 17/60, H04L 12/58

(54) **INFORMATION TRANSMISSION SYSTEM, INFORMATION TRANSMISSION METHOD, COMPUTER PROGRAM STORAGE MEDIUM WHERE INFORMATION TRANSMISSION PROGRAM IS STORED**

(30) Priority: 27.12.1999 JP 37701599
(71) Applicant: Yamamoto, Keisuke, Numazu-shi, Shizuoka 410-0822 (JP)
(72) Inventor: Yamamoto, Keisuke, Numazu-shi, Shizuoka 410-0822 (JP)
(74) Representative: Grünecker, Kinkeldey, Stockmair & Schwanhäusser Anwaltssozietät
(86) International application number: JP0006757
(87) International publication number: WO01048616

(57) **Abstract**

Advertisement information is distributed to users in accordance with the degree of agreement of the districts classified by access of the users to the network with the districts where the advertiser and information provider want to send advertisement information. An information transmission system comprises user address acquiring means for acquiring the IP address of a user automatically in real time, a classified-by-district address database containing IP addresses classified by district, and a file classification database for specifying a file to be transmitted selected from among files in accordance with the classification by district, wherein the category of the district is found referring to the classified-by-district address database from the IP address of the user acquired by the user address acquiring means, and a file corresponding to the category is specified by using the file classification database and transmitted to the user's computer.

## Description

### TECHNICAL FIELD

The present invention relates to a system and method in a computer network, which transmit advertisements and information and so forth to the individuals who use the network through a server system.

### BACKGROUND ART

By means of a conventional information transmission system that distributes advertisements and so forth on a network, some businesses store data for displaying specific advertisements and information in the servers arranged on the network, and when a user accesses a Web page on the Internet, transmit a data file to display it on the computer of the user.

This system usually displays images represented by banner advertisements and text advertisements, on part of the Web page displayed through a browser on the computer of the user, and a system of displaying information of a linked Web page by clicking these is used in most cases.

Recently, in an information transmission system that transmits electronic mail information to plural users, such as a mail magazine and a mailing list, a distribution system is generally spread which automatically inserts advertisement information and the like into electronic mails that are transmitted to users.

Endeavors have also been made to grope for communication and/or marketing techniques corresponding to the properties of individual users, by utilizing the features of the computer network.

However, only using these systems result in transmitting the advertisements and information of the same contents to all the users who access the files containing the data, or to all the users who receive the electronic mails including the data, as for the individual data files of advertisements and information that are arranged on the network, and the advertisement and information data automatically inserted into the electronic mails.

Accordingly, these systems transmit the advertisements and information of the same contents, regardless of the regional information of the dwelling places and duty places, etc., of the users, the attributes such as the age and sex, etc., and the subjects of interests, etc. Therefore, some transmitted advertisements and information become useless to the users who do not want to have, and some users feel nuisance.

When a banner advertisement is displayed, the click through rate for indicating the rate of the users who want more detailed information by clicking it, or the users who apply for the products or services has not increased as intended, which is a problem.

Transmission of useless data leads to increase of communication quantity. And, these systems will forcibly give useless burdens to the users who take measures for not displaying the image information, and will not display effective and useful image data indiscriminately, except for useless image data of the banner advertisements and the like, thus creating disadvantages.

On the other hand, advertisers and information senders have the following problems.

If an advertised product targets a specific user group, the advertiser or the information sender will necessarily desire to transmit an advertisement and/or information to match with the regional information of the dwelling places and duty places, etc., of the users, the attributes such as the age and sex, etc., and the subjects of interests, etc.

When an advertiser or information sender wishes to provide an advertisement or information only to a specific area, or when the information provider desires to transmit information that is effective only to the users in a specifically targeted area, to transmit the same advertisement or information to the users who are not targeted will become useless, and it will give offense to the users, which conceivably exhibits insufficient effect of the advertisement.

In view of the estimate of the advertisement charge, useless expenditures deteriorate the cost-effectiveness, thus leading to an inefficiency of advertisement and information provision.

In order to solve these problems, various systems have been put forward which analyze or classify the targets of advertisements and information to be transmitted, and test the effectiveness of transmitting the advertisements and information on the network.

As a system to transmit an advertisement and/or information to users to match with the regional information of the dwelling places and duty places, etc., and the attributes such as the age and sex, etc., of the users, there have been devised the following techniques.

In the Japanese Published Unexamined Patent Application No.Hei 11-282393, "Method for Placing Advertisement for Individual on Internet According to Purchase History" , the purchase history by each user is stored in the database, and the ID and password are issued to each customer. According to this system, the ID and password must be inputted; otherwise, the advertisements are not displayed. The input of the ID and password must be completed at the time of deciding purchasing; and the users are anticipated to hesitate the input, and effectiveness of the advertisement cannot be expected.

Also, in the Japanese Published Unexamined Patent Application No.Hei 11-95694, " Device and Method for Advertisement and Recording Medium with Information Processing Program" , users are prompted to input by means of entry to questionnaires, quizzes, or guest books, and by other systems; and thereby this system grasps the degree of user's interest to the advertisement and displays detailed advertisement information. Thus, this system has also to go through the input process by the users.

As in the Japanese Published Unexamined Patent Application No.Hei 11-96164 and No.Hei 11-134353, the systems have been devised and used which store the access histories of users as a database by means of a log file stored in a server, research the interests by the access histories of the individual users by means of the Cookie information and so forth, and create the database by using the attributes of the other individual users. Further, as in the DART (Dynamic Advertising Reporting and Targeting) by Double Click Co. of America, it is conceivable to divide the advertisement to be distributed, according to the attributes such as companies and areas of users, domains and Internet providers, and so forth.

However, even these systems cannot solve the following problems.

These systems have as an essential component a database in which are collected the data of all the users who accessed the file of a specific advertisement. According to Double Click Co. of America, they supposedly have a personal database for 28 million people as of the year 1999 ( "One to One Web marketing in the Internet era" issued by Nikkei BP Co.)

However, in order to keep the data of such a huge-scale database in the most updated and accurate state, the control and maintenance thereof requires enormous labors and facilities, which increases the cost.

And, even if such a database for some ten million people can be controlled and maintained, when the world population of some billion people is considered on the assumption of the Internet world connecting the whole world, the number of people who are not listed on the database is still huge.

When the users of that number of people are classified into the targets by area by using a huge data of some million people to some ten million people, even if it is intended to transmit a specific information to a specific group and transmit another specific information to another specific group by classifying individual data into each of personal data, the partitions by area will become coarse because of the problems of the control of huge data and the operability and cost of transmitting advertisements.

With regard to the classification by area, as a unit of nation or as a unit of state of the United States of America at best, the very hugeness of data permits only a coarse classification of the huge data under the existing circumstances.

In the conventional advertising system, for example, in the advertisement by TV or radio broadcasting to cover the whole land of Japan, it can freely be combined for a local firm to spread a nationwide advertisement and publicity, and/or to place an advertisement only to a local TV station, and the advertisement charges have been established in correspondence with such a free combination.

In the national column and local column of a national newspaper, and in a local newspaper, the circumstances are the same.

In the leaflet of a newspaper, the poster in a railway station, and the hanging advertisement inside a train and so forth as an advertising system still more closely connected to a local community, the circumstances are the same.

However, in regard to the advertisement and marketing development by means of the computer network, such as Web advertisements and electronic mail advertisements, such a finely developing system to each local community has not been established.

In addition, the system to create a database of individual users involves the following problems.

The system takes an essential construction that collects data of all the users who accessed a specific server and forms a database. Therefore, as to a user who accesses the server for the first time, the system cannot exhibit the effect of matching the advertisement with the attributes and so forth of the user.

It is also conceivable to specify a user by the domain name and IP address of the user who accessed a server through a log file and so forth stored in the server. However, a great majority of individual Internet users use Internet service providers (ISP), and these ISPs have multiple IP addresses for each of the access points. Accordingly, the IP address of each user seeking for the dialup IP connection is allocated at each time of accessing, and the IP address will become different at each time. If the IP address is the same by chance, the user can be different.

In case of a user in a business or organization having its domain name, even if the IP address is invariant, it is impossible to specify the very person in the business or organization that uses it. In consequence, the system cannot achieve an expected effect of advertisement, as compared with the hugeness of data and the labor and cost of maintenance and control.

### DISCLOSURE OF THE INVENTION

Accordingly, an object of the present invention is to provide an information transmission system that solves the foregoing problems, when transmitting advertisements and other information by means of a computer network, classifies users by arbitrary areas through the IP addresses thereof, and effectively transmits them on the basis of the classification.

Another object of the invention is to provide an information transmission system that, when there are plural transmitters that want to transmit advertisements and information, permits the classification of areas to be adjusted in accordance with the individual dispositions of these transmitters, which achieves a higher advertising effect or information providing effect, when taking the cost and labor of maintenance and control into consideration.

Another object of the invention is to provide an information transmission system that makes free and clear combinations of information transmission by area in a nationwide advertisements and information provision and a regional advertisements and information provision, and thereby establishes an advertisement charge system to correspond therewith.

Another object of the invention is to provide an information transmission system and a recording medium with a program thereof stored that, while the hardware and software on the computer network are in the midst of progress, and various systems are devised for providing advertisements and information on the network, can suitably apply to these new technological phases and perform a fine advertisements and information transmission to match with the circumstances of areas and so forth.

In order to solve the foregoing problems, the invention set forth in Claim 1 is characterized by an information transmission system in a computer network including the Internet (WWW), which comprises: a user address acquisition means that, when a user accessed an information transmission source, acquires the IP address of the user automatically in real time, an address classification database by area in which plural IP addresses are classified in advance by area, a file classification database for designating a file to be transmitted among plural files in correspondence with the classification by area, and a file transmission program that judges the classification by area from the IP address of the user acquired by the user address acquisition means by referring to the address classification database by area, designates the file corresponding to the classification by the file classification database, and transmits to the computer of the user. According to this information transmission system, when advertisements and other information are transmitted by means of a computer network, the users are classified by arbitrary areas through the IP addresses thereof and these information are effectively transmitted on the basis of the classification; and when there are plural transmitters that want to transmit advertisements and information, the classification of areas and so forth can be adjusted in accordance with the individual dispositions of these transmitters to perform a finely adjusted transmission of advertisements and information, thus achieving high advertising effect or information providing effect.

The invention set forth in Claim 2 is characterized by an information transmission system in such a computer network, which comprises: a user address acquisition means that, when a user accessed an information transmission source, acquires the IP address of the user automatically in real time, a storage means inside a server that beforehand stores plural files to be transmitted to a computer of the user, an address classification database by area in which plural IP addresses are classified in advance by area, a file classification database for designating a file among plural files in correspondence with the classification by area, and a file transmission program that judges the classification by area from the IP address of the user acquired by the user address acquisition means by referring to the address classification database by area, designates the file corresponding to the classification by the file classification database, and transmits to the computer of the user. According to this information transmission system, when advertisements and other information are transmitted by means of a computer network, the users are classified by arbitrary areas through the IP addresses thereof and these information are effectively transmitted on the basis of the classification; and when there are plural transmitters that want to transmit advertisements and information, the classification of areas and so forth can be adjusted in accordance with the individual dispositions of these transmitters, thus achieving higher advertising effect or information providing effect.

The invention set forth in Claim 3 is characterized by the information transmission system set forth in Claim 1, in which the file transmitted to the user in correspondence with the classification by area acquired from the IP address of the user is displayed on part of the browser screen, when the WWW page of the information transmission source that the user accessed is displayed on the computer of the user.

The information transmission system of this invention is characterized in that, when the user accesses a page that displays specific information, advertisements and information such as banner advertisements and images are displayed on part of the page.

Here, the information displayed on part of the browser screen is not necessarily limited to an image. For example, it may be a data of text and so forth with a link applied on the other page, or it may be a file to be displayed on a part of frame of partitioned frames, as a frame in which plural pages are displayed on one screen with divisions.

Also, the file to be displayed may be animated images, or it may be something like sound data other than visual data.

The invention set forth in Claim 4 is characterized by the information transmission system set forth in Claim 2, in which the file transmitted to the user in correspondence with the classification by area acquired from the IP address of the user is displayed on part of the browser screen, when the WWW page of the information transmission source that the user accessed is displayed on the computer of the user.

The information transmission system of this invention is characterized in that, when the user accesses a page that displays specific information, advertisements and information such as banner advertisements and images are displayed on part of the page.

The information transmission system is characterized in that the file of advertisements and information and so forth to be displayed on part of a page is stored in the storage means inside a server that beforehand stores plural files to be transmitted to the computer of the user.

In the same manner as the invention set forth in Claim 4, the information displayed on part of the browser screen is not necessarily limited to an image; for example, it may be a data of text and so forth with a link applied on the other page, or it may be a file to be displayed on a part of frame of partitioned frames, as a frame in which plural pages are displayed on one screen with divisions.

Also, the file to be displayed may be animated images, or it may be something like sound data other than visual data.

The invention set forth in Claim 5 is characterized in that, in the information transmission system set forth in Claim 1 or Claim 2, the file to be transmitted to the computer of the user goes through the following processing: judging the classification by area from the IP address of the user acquired by the user address acquisition means, referring to the address classification database by area, judging the file corresponding to the classification by area by the file classification database, and designating to refer to an Internet provider that the user uses, a domain name of the user, a domain type of the user, information such as ID that the user inputs, a browser software used, an OS used, an electronic authentication of the user, and even a user information database that stores the other user information.

When classifying users, the information transmission system also utilizes the information of the database that stores various information of the environments and attributes of the users and so forth, in addition to the classification information by area acquired from the IP addresses of the users. Thus, the information transmission system is able to transmit advertisements and other information to more finely segmented users on the basis of a more detailed database by means of the computer network, which achieves a higher advertising effect and information providing effect.

The invention set forth in Claim 6 is characterized by an information transmission method in a computer network, which comprises: a user address acquisition means that, when a user accessed an information transmission source, acquires the IP address of the user automatically in real time, an address classification database by area in which plural IP addresses are classified in advance by area, a file classification database for designating a file among plural files in correspondence with the classification by area, and a file transmission program that judges the classification by area from the IP address of the user acquired by the user address acquisition means by referring to the address classification database by area, designates the file corresponding to the classification by the file classification database, and transmits to the computer of the user.

The invention set forth in Claim 7 is characterized by an information transmission system in a computer network, which comprises: a user address acquisition means that, when a user accessed an information transmission source, acquires the IP address of the user automatically in real time, an address classification database by area in which plural IP addresses are classified in advance by area, a file classification database for designating a file to be transmitted among plural files in correspondence with the classification by area, and a file transmission program that judges the classification by area from the IP address of the user acquired by the IP address acquisition means by referring to the address classification database by area, designates the file corresponding to the classification by the file classification database, and transmits to the computer of the user, in which the file to be transmitted is composed of sound data, animation data, image data, and other data, which is displayed on the computer terminal of the user during reproduction of the animated images or sound data, or the other data through the computer network.

In recent years, ground wave broadcasting stations and so forth broadcast programs of animations and sounds through corporations' own Web pages (Internet TV, Internet radio), and carry out live relay broadcasting of music concerts or events; and thus the streaming distributions of music and images on the network evolve as a growing trend.

When the broadcasting through a computer network such as the Internet broadcasting is carried out by means of these techniques, even if the contents of the broadcasting program can be accessed commonly to the whole country or commonly to the whole world, the information transmission system according to this invention enables distributions of commercials by area, or presentations of advertisements as a program sponsor by area.

And, a clear charge system thereof can also be established.

The invention set forth in Claim 8 is characterized by an information transmission system in a computer network, which comprises: a user address acquisition means that, when a user accesses an information transmission source and downloads sound data, animation data, image data, document data, program data, and other data, acquires the IP address of the user automatically in real time, an address classification database by area in which plural IP addresses are classified in advance by area, a file classification database for designating a file to be transmitted among plural files in correspondence with the classification by area, and a file transmission program that judges the classification by area from the IP address of the user acquired by the IP address acquisition means by referring to the address classification database by area, designates the file corresponding to the classification by the file classification database, inserts into the data to be downloaded, and transmits to the computer of the user, in which the file to be transmitted is sound data, animation data, image data, or other data, which is displayed on the computer terminal of the user during reproduction of the downloaded animated images or sound data, or the other data.

Therefore, when the animation, sound and the other data that are conventionally delivered in a form of package media or print/publication, etc., are distributed in the computer network, the information transmission system according to this invention permits distributions of advertisements and information by area.

The invention set forth in Claim 9 is characterized in that, in the information transmission system set forth in Claim 2 or Claim 4, the plural files transmitted to the computer of the user can be stored in the storage means inside the server, without the transmitter of advertisements or information troubling the manager of the server.

The invention set forth in Claim 10 is characterized in that, in the information transmission system set forth in Claim 1 through Claim 5, or Claim 7 through Claim 9, the computer on the user side is a device incorporated in household electric/electronic equipment.

The above computer on the user side is a device called the consumer information appliance in which conventional electric/electronic equipment and a computer are merged, which is connected by means of a network. However, it is not necessarily limited to household equipment, and it may be a device installed in a business establishment, factory, public institution, and the like.

The invention set forth in Claim 11 is characterized by an information transmission reception system in which users receive electronic mails in a computer network, which comprises: an IP address acquisition means that, when a user accessed a server in order to fetch the electronic mail addressed to oneself, acquires the IP address of the user automatically in real time, an IP address classification database in which plural IP addresses are classified in advance by area and so forth, an advertisement/information classification database for designating an advertisement and information corresponding to the classification among plural advertisements and information, and an advertisement/information transmission program that judges the classification by area and so forth from the IP address of the user acquired by the IP address acquisition means by referring to the IP address classification database, designates the advertisement and information corresponding to the classification by the advertisement/information classification database, and automatically inserts into the electronic mail that the user fetches.

The invention set forth in Claim 12 is characterized by a computer program storage medium, in a computer network that possesses: a user address acquisition means that, when a user accessed an information transmission source on the computer network, acquires the IP address of the user automatically in real time, an address classification database by area in which plural IP addresses are classified in advance by area, and a file classification database for designating a file to be transmitted among plural files in correspondence with the classification by area, which judges the classification by area from the IP address of the user acquired by the user address acquisition means by referring to the address classification database by area, designates the file corresponding to the classification by the file classification database, and transmits to a computer of the user.

The invention set forth in Claim 13 is characterized in that, in the information transmission system set forth in Claim 1 through Claim 5 or Claim 7 through Claim 10, the user address acquisition means that acquires the address of the user automatically in real time is a means that acquires information to identify a base station or a relay station of a portable telephone, PHS, or the other radio communication of the user, and the information transmission system includes: an address classification database by area in which the plural identification information are classified in advance by area, a file classification database for designating a file to be transmitted among plural files in correspondence with the classification by area, and a file transmission program that judges the classification by area from the identification information by area of the user acquired by the user address acquisition means by referring to the address classification database by area, designates the file corresponding to the classification by the file classification database, and transmits to the computer of the user.

Owing to popularization of portable telephones and PHS, there are an increased number of users who access the computer network by means of these radio communication systems. And, the portable telephones for this purpose as well as the Internet sites for the portable telephones have been increasing.

The service using the satellite communication is about to propagate with progress of technological developments.

The position information of a terminal in such a radio communication can be acquired by using the GPS function, or by detecting that which base station captures the radio wave from the portable telephone or PHS. The techniques to acquire the position information are disclosed in, for example, the Japanese Published Unexamined Patent Application No.Hei 11-317974, "Position Information Detection System and Its Method", No.Hei 11-178047, "Radio Portable Terminal and Its Position Information Acquisition System", No.Hei 10-136434, "Terminal Connecting Position Information Collecting Method and System Device", and so forth.

The position information of the radio terminal of the user is acquired by means of these techniques, the acquired position information is noticed to the server side by the radio terminal, the classification by area is judged from the identification information by area of the user by referring to the address classification database by area, the file corresponding to the classification is designated by the file classification database, and the file to match with the area is transmitted to the radio terminal of the user or to the computer connected to the terminal.

The invention set forth in Claim 14 is characterized in that, in the information transmission system set forth in Claim 1 through Claim 5, Claim 7 through Claim 11, or Claim 13, the computer network is constructed by any other method than a method that identifies a host computer on the network by the IP address in case of the TCP/IP being served as the communication protocol, the user address that acquires the address of a user automatically in real time is an identification information that identifies a host computer on the network, in the same manner as the IP address in case of the TCP/IP being served as the communication protocol, and the information transmission system includes: a user address acquisition means that, when the user accessed an information transmission source on the computer network, acquires the address of the user automatically in real time, an address classification database by area in which the plural identification information are classified in advance by area, a file classification database for designating a file to be transmitted among plural files in correspondence with the address classification by area, and a file transmission program that judges the classification by area from the identification information by area of the user acquired by the user address acquisition means by referring to the address classification database by area, designates the file corresponding to the classification by the file classification database, and transmits to the computer of the user.

At present, the TCP/IP is the basic communication protocol of the Internet, and the system is adopted which identifies the entire host computers connected to the network by the IP addresses.

Instead of this system, even if a similar computer network system is constructed by the other communication protocol, as long as the new system can uniquely identify a computer connected to the network by means of an address that is allocated without duplication throughout the world, this invention can be applied to the new system in the same manner.

The invention set forth in Claim 15 is characterized by the information transmission system set forth in Claim 1 through Claim 5, or Claim 7 through Claim 10, which comprises: a user address acquisition means that, when a user accessed an information transmission source on the computer network, acquires the IP address of the user automatically in real time, an address classification database by area in which plural IP addresses are classified in advance by area, and a file classification database for designating a file to be transmitted among plural files in correspondence with the address classification by area, a file transmission program that judges the classification by area from the IP address of the user acquired by the user address acquisition means by referring to the address classification database by area, designates the file corresponding to the classification by the file classification database, and transmits to the computer of the user, and a means that, when a user accesses the information source, analyzes accessed conditions by the IP addresses of the users, and stores an analyzed information.

### BRIEF DESCRIPTION OF THE DRAWINGS

Fig. 1 is a system construction chart illustrating the basic construction of this invention;
Fig. 2 is a data configuration chart illustrating an example of an address classification database by area;
Fig. 3 is a data configuration chart illustrating an example of a file classification database;
Fig. 4 is a simplified flow chart illustrating the basic operation of a file transmission program;
Fig. 5 is a system conceptual chart that displays different files by area in a frame screen in which one screen is divided to display plural pages, and
Fig. 6 is a system construction chart illustrating an example in which consumer information appliances are used in this invention.

### THE BEST MODE FOR CARRYING OUT THE INVENTION

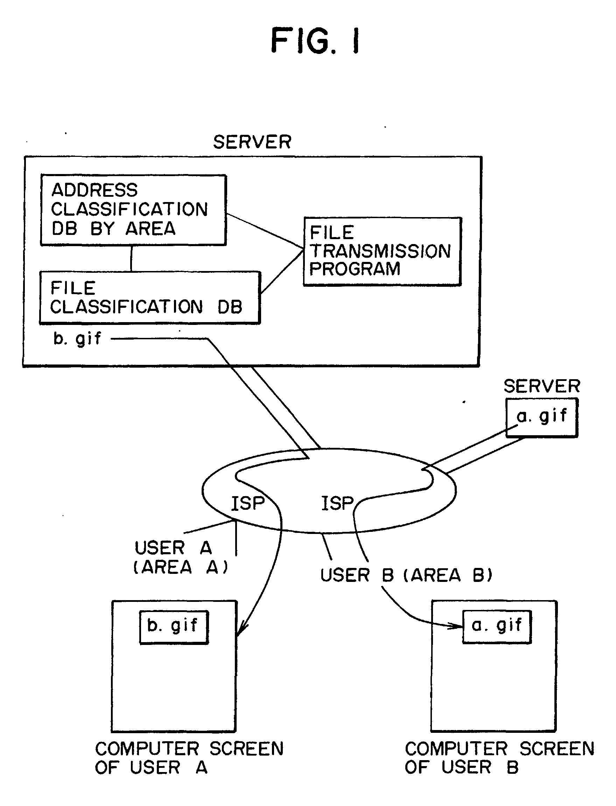

The preferable modes of the information transmission system and method, and the information record medium relating to the invention will be described with reference to the accompanying drawings; and first, the basic operation of the information transmission system relating to the invention will be explained with Fig. 1.

Fig. 1 is a system construction chart illustrating the basic construction of the present invention.

The information transmission system as the basic constituent of the invention possesses a server provided with the following construction, in a computer network.

In the first place, when a user accessed a specific information transmission source such as a Web page on the Internet, an IP address acquisition means that acquires an IP address of the user acquires the IP address automatically in real time.

The IP address of the user being a transmission source of information is described in an IP header added to data from the user, and is handed over to the server side being the destination of the information.

The access log of the user is recorded immediately in a log file of the server at an access to a file of the server.

In order to acquire the current IP address of the user from this log file, a program language such as CGI, SSI, or JAVA is generally used.

The IP address is composed of 32-bits numerical data, which includes the network address part indicating a network that the address pertains to, and the host address part indicating a host computer that it pertains to. A numerical form of, for example, "012.345.67.8" expresses the addresses on the network of the servers scattering throughout the world. These can be converted mutually in one-to-one correspondence into a domain name, a character string that contains a kind of meaning, such as "~. provider name.ne.jp", "~. company name.co.jp", etc. However, the IP address as is only forms an enumeration of numbers, which does not apparently permit discrimination.

However, as mentioned above, as it is clear from the fact that the IP address can be converted mutually into the domain name in one-to-one correspondence, the IP address always corresponds with a specific server that possesses an original domain name, and has a correspondence with a specific computer connected to the network.

In other words, to specify the IP address means to specify the server of the user.

Here, the IP address specified in this invention includes, in addition to the currently used IP version 4(IPv4), a revised version such as the IP version 6 (IPv6), which is going to be adopted in provision for the IP address being insufficient because of a rapid spread of the Internet.

The IP address specified in this invention also includes the private address when the TCP/IP is used in a closed network, such as one established inside a business firm, the Intranet that is not connected to the Internet.

The information transmission system of the invention is also effective in such a case that specialized information by area are transmitted in a business firm that has branch offices scattering over the whole country of Japan.

In the invention set forth in Claim 14, in replacement of the IP address in a computer network when the TCP/IP is served as the communication protocol, the user address includes the whole of the identification information that uniquely identifies the server on the network, in the same manner as the IP address when the TCP/IP is served as the communication protocol.

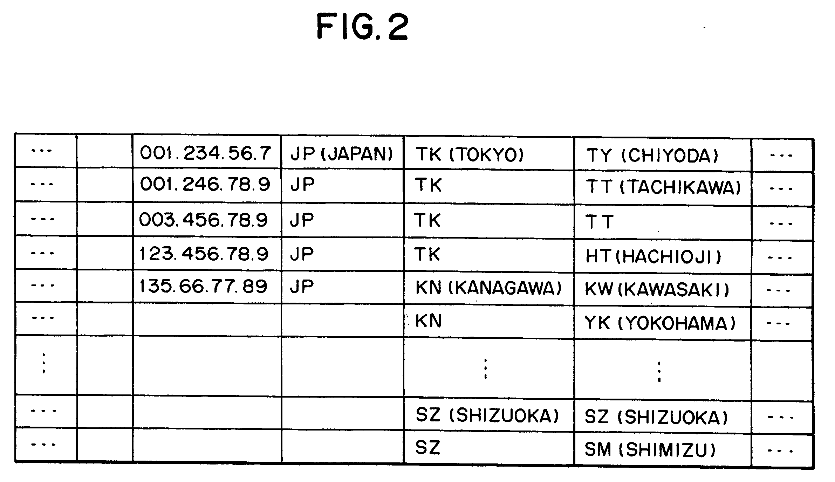

In the next place, the server of the information transmission system as the basic component of the invention is provided with an address classification database by area in which plural IP addresses of the users are classified in advance by area, as illustrated in Fig. 2.

With regard to specific servers having original domains, the information issued by the organization that controls the domains, NIC (Network Information Center) or JPNIC in Japan, gives the addresses of theirs, whereby the countries and the areas that they are located in are clarified.

The Internet provider that a great majority of individual users use possesses a large number of IP addresses at each access points established by area, since a great many users access the network from a vast variety of areas in the country.

Therefore, a great majority of the IP addresses of each individual users who use the Internet Service Provider (ISP) by the dialup IP connection are different at each access; and if the data of the individual users who access the server are organized into a huge database, the maintenance and control of each personal data become difficult as already mentioned.

However, even if there are plural IP addresses at each access point of an ISP, if it is discriminated by the database that which access point they pass through, it will be possible to immediately discriminate the area from which the individual access of each person comes in.

Even the access of an individual user who accesses the server for the first time becomes possible of being discriminated by organizing a database of the IP addresses at each access points of the ISPs, which was impossible in the conventional system.

The database by area can be partitioned by means of the hierarchy of a nation, district, prefecture, city, town, village, etc., which permits the classification of users in correspondence with desires of the information transmitters who want to transmit advertisements and information.

Since the IP address corresponds to the domain name, the address classification by ISP and the discrimination as to whether a user uses a portable telephone or not becomes possible.

These databases are by far excellent in labor and cost, etc. , as compared with creation of a huge database of some ten million people, maintenance and control thereof, and so forth.

In regard to the users of business firms and institutions that possess the domain names of their own, the information issued by the organization that controls the domains gives the addresses of theirs, whereby the countries and the areas that they are located in are clarified. Therefore, to add the above to the database will not involve much difficulty.

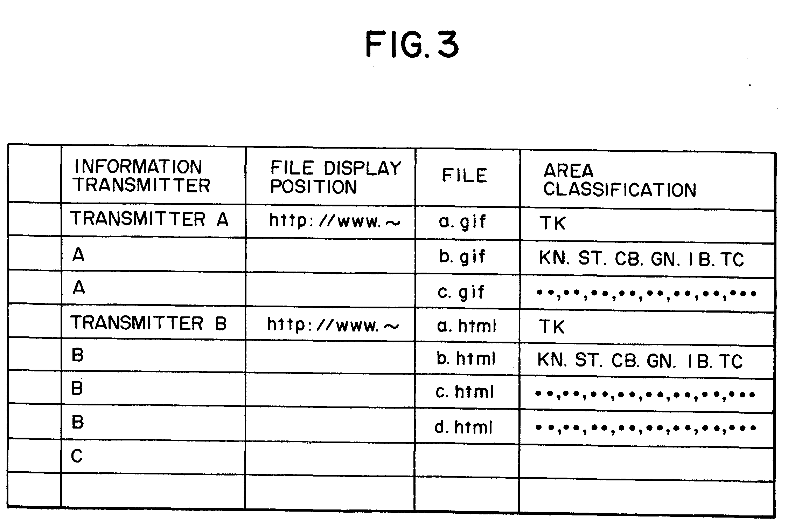

The server of the information transmission system as the basic component of the invention is provided with, as illustrated in Fig. 3, a file classification database for designating a file including advertisements and other information that a transmitter wants to transmit among plural files in correspondence with the aforementioned classification by area.

Here, the aforementioned address classification database by area and the file classification database may be separately organized, or they may be integrated into one database. If they are provided with these functions, they may be a relational database that possesses, for example, an address classification table by area and a file classification table.

To explain this concretely, it is assumed that an information transmitter A transmits an image a (a. gif) in the 23 wards in Tokyo metropolis, an image b (b. gif) in Musashino city and Mitaka city in Tokyo metropolis, and an image c (c. gif) in Yokohama city in Kanagawa prefecture, and does not transmit any information in the other areas.

On the other hand, it is assumed that an information transmitter B wants to transmit a file a (a. html) in Tokyo metropolis, a file b (b. html) in the Kanto area other than Tokyo, and a file c (c. html) in the whole country of Japan except for the above two areas.

The file classification database stores the data in which these wishes of plural information and advertisement transmitters are established.

It is also possible to set the file classification database in such a manner that the information transmitter is able to transmit a file including universal data effective in any areas except for specified areas.

When there appears a fresh IP address that is not registered in the IP address classification database in which plural IP addresses are classified in advance by area, it is also possible to set the database so as to transmit a file including universal data effective in any areas.

In the invention set forth in Claim 5, both the address classification database by area and the file classification database refer to an Internet provider that the user uses, a domain name of the user, a domain type of the user, information such as the ID that the user inputs, a browser software used, an OS used, an electronic authentication of the user, and even a user information database that stores the other information, and designates a transmission file.

When the users are classified, it is effective to utilize various information of the environments and attributes of the users and so forth, in addition to the classification information of the areas that are selected from the IP addresses of the users, in order to narrow the file transmission targets.

In the invention set forth in Claim 15, the information transmission system is provided with: a user address acquisition means that, when a user accessed an information transmission source on the computer network, acquires the IP address of the user automatically in real time, an address classification database by area in which plural IP addresses are classified in advance by area, and a file classification database for designating a file to be transmitted among plural files in correspondence with an address classification by area, a file transmission program that judges the classification by area from the IP address of the user acquired by the user address acquisition means by referring to the address classification database by area, designates the file corresponding to the classification by the file classification database, and transmits to a computer of the user, and a means that, when the user accessed the information source, analyzes accessed conditions by the IP addresses of the users, and stores an analyzed information.

For analyzing accesses and storing the result as a data, a method by the CGI programming or the like is generally used.

However in this invention, a fresh construction is introduced which judges the classification by area from the IP address of the user acquired by the user address acquisition means by referring to the address classification database by area. Thereby, it has become possible to attain an access analysis result and utilize the result, which was impossible in the conventional system.

It will also be possible to utilize a more detailed data by acquiring and recording the following information: an access frequency by the accessed file, an access frequency by the classification of the accessed date, etc., an access retention time, access paths before and after the user accesses an information transmission source, an Internet provider that the user uses, a domain name of the user, a domain type of the user, a distinction of radio communication or wired communication, a relay station of the radio communication, information such as the ID that the user inputs, a browser software used, an OS used, an electronic authentication of the user, and other information.

Now, in the invention set forth in Claim 1, claim 3, the storage place of the files that an information transmitter desires to transmit to the users may be set at any place on the network, or it may be set in the server of an individual firm or an institution that transmits advertisements and information.

On the other hand, in the invention set forth in Claim 2, claim 4, these files are stored in the same place or the same server of the manager as the IP address acquisition means, the IP address classification database, the file classification database, and the file transmission program described later. Therefore, it is convenient in case the server manager controls the files collectively.

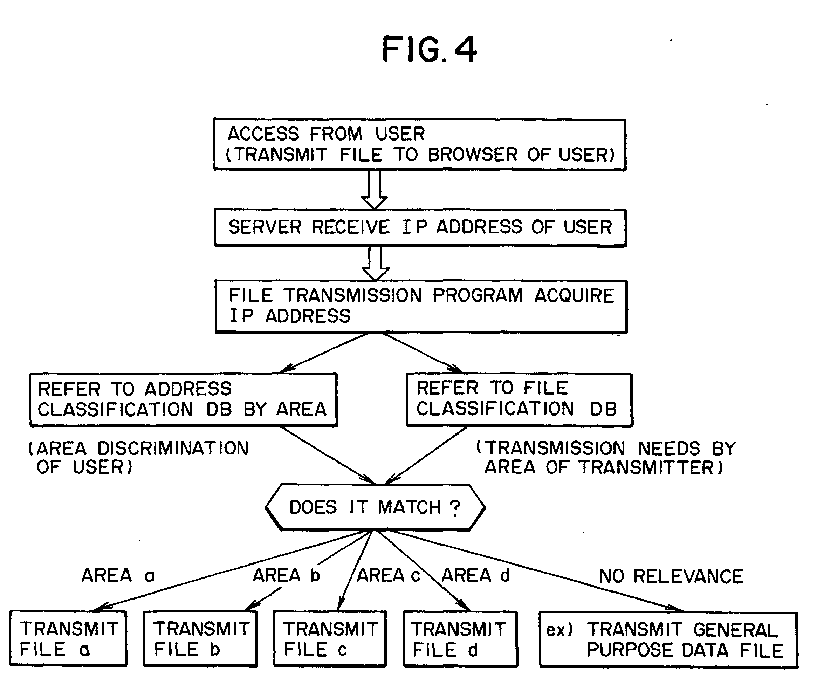

The server of the information transmission system as the basic component of this invention is provided with a file transmission program that judges a classification by area by referring to the address classification database by area, as illustrated in Fig. 4, designates a file corresponding to the classification by the file classification database, and transmits the file to a computer of the user.

This program is realized by a language that can handle file operations, such as CGI or SSI, etc., which is programmed to posses the following functions. And, when a user accesses a file, the program is set such that the file transmission program functions.

To be concrete, when the user accessed a specific Web page, a data for requesting a transmission of the page (file) by the user is transmitted to the server of this invention together with the IP header with the IP address of the user added.

The IP address is recorded in the log file of the server together with other information. These communication data are made up with the common format that is used in almost all the Web server-software development companies.

The Web page is transmitted in answer to the transmission request of the user, which is displayed on the screen of the computer terminal of the user, and at the same time the file transmission program by the CGI or the like is set to start.

Receiving the current IP address that the user uses for the connection, the file transmission program refers to the address classification database by area to see whether the current IP address is in the database or not. If it is, the area classification in which the current IP address is located will be confirmed.

Next, the file transmission program refers to the file classification database in which is defined by transmitter by area that advertisement transmitters and so forth want to transmit which file in which area classification.

When the area classification in which the current IP address is located exists in the database of a transmitter, the transmitter of advertisements and information transmits a specific file, with a hope of the file to be displayed on the computer screen of the user, which is confirmed by the set information of the file classification database.

Then, the file transmission program transmits a designated file to the computer of the user so that the file is displayed on a designated location.

When the WWW page is displayed on the computer of the user, the file may be displayed on the whole of the browser screen, or it may be displayed on a window separate from the current window opened.

As the invention set forth in Claim 3 or Claim 4, the file may be displayed on part of the browser screen. For example, banner advertisements and image advertisement information may be displayed on a partial area of the page.

The information displayed thereon is not necessarily limited to an image. For example, it may be a data of text and so forth with a link applied on the other page, or it may be a file to be displayed on a part of frame of partitioned frames, as a frame in which plural pages are displayed on one screen with divisions.

Also, the file to be displayed may be animated images, or it may be something like sound data other than visual data.

To draw an instance from advertisements, commercial film, animated images such as animations, voice commercials, music, or jingles can be the case.

In the aforementioned concrete example, in case the information transmitter A transmits an image a (a. gif) in the 23 wards in Tokyo metropolis, an image b (b. gif) in Musashino city and Mitaka city in Tokyo metropolis, and an image c (c. gif) in Yokohama city in Kanagawa prefecture, and does not transmit any information in the other areas, these images can be displayed on part of a specific Web page.

On the other hand, in case the information transmitter B transmits a file a (a. html) in Tokyo metropolis, a file b (b. html) in the Kanto area other than Tokyo, and a file c (c. html) in the whole country of Japan except for the above two areas, the setting can be made such that the user who accesses the specific Web page moves to the other page, namely the file a, b, c, as it remains intact.

The setting can also be made such that a transmitted file is displayed on a part of frame of partitioned frames, as a frame in which plural pages are displayed on one screen with divisions.

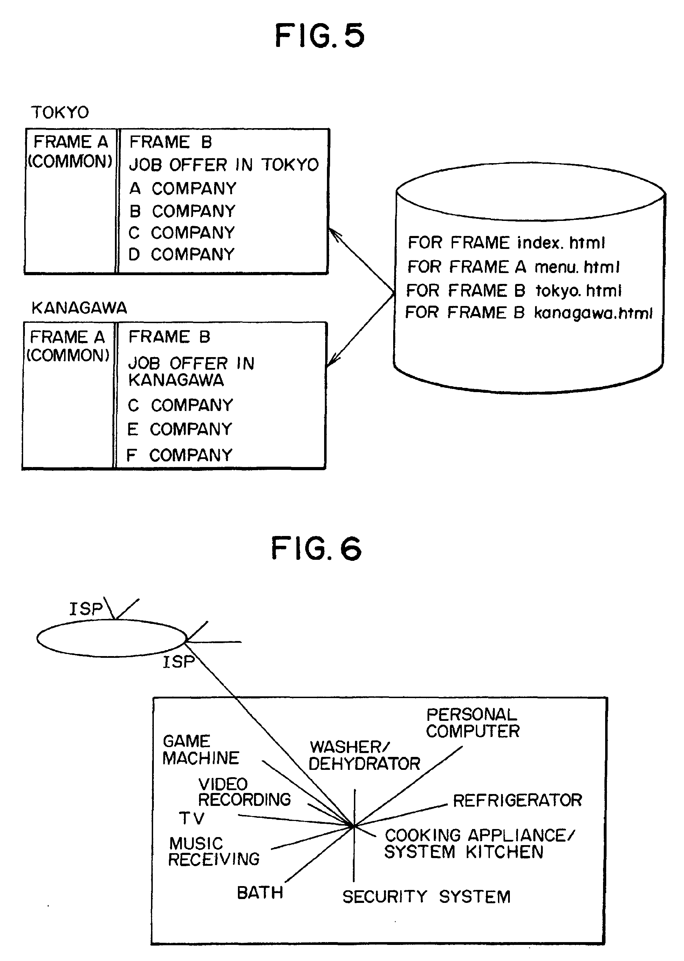

Fig. 5 illustrates an example in which these settings are explained more concretely.

Here is a Job offer and job hunting site that a private organization or public institution supervises, as an example.

The computer of a user that accessed in the 23 wards in Tokyo metropolis displays on the terminal screen thereof the job offer information from A Corporation that offers jobs in the whole country of Japan, the information from B Corporation that offers jobs in Tokyo metropolis, Nagoya city, and Osaka prefecture, the information from C Corporation that offers jobs in Tokyo metropolis and Kanagawa prefecture, and the information from D Corporation that offers jobs in Shibuya ward in Tokyo metropolis.

The computer of a user that accessed in Kanagawa prefecture displays on the terminal screen thereof the job offer information from C Corporation that offers jobs in Tokyo metropolis and Kanagawa prefecture, the information from E Corporation that offers jobs in Kanagawa, Chiba, and Gunma prefectures, and the information from F Corporation that offers jobs in Yokohama city and Kawasaki city in Kanagawa prefecture.

This is profitable in case a business firm developing their business and marketing in close connections with each area desires to transmit advertisements and information to each area

This is also effective in the information transmission of an automobile sales company that sets up shops in various places to carry on business, the information transmission of an insurance agency that establishes agents in various places to carry on business, and the information transmission of real estates to each area and so forth.

This is also effective in the information transmission of a business firm that develops business only in one area, which does not need a nationwide advertisement.

It is also possible to set so as to display different information and advertisements individually by the areas of users, in the portal site that most of users access at the head, such as a Web page retrieval site and a provider site.

This is also effective in the transmission of information that a certain area needs, such as information of concerts and invents to be held in an area, information of festivals and pleasure trips and restaurants, information of a public institution in the neighborhood.

The invention set forth in Claim 6 relates to a method of implementing the information transmission system described so far, in a computer network.

The invention set forth in Claim 12 relates to a computer program storage medium that is used for implementation of the information transmission system, which stores a file transmission program that judges the classification by area from the IP address of the user acquired by the user address acquisition means by referring to the address classification database by area, designates a file corresponding to the classification by the file classification database, and transmits the file to a computer of the user.

In the storage medium is included a hard disk, CD-ROM, DVD, MD, floppy disk, and any other types.

According to the invention set forth in Claim 9, in an information transmission system set forth in Claim 2 or Claim 4, the plural files transmitted to the computer of the user can be stored in the storage means on a server, without a transmitter of advertisements or information troubling a manager of the server.

By means of setting the FTP program that transmits a file to a server and setting the passwords of transmitters of advertisements or information by transmitter, for example, the file to be transmitted can be changed only by the transmitter's own work.

Therefore, this will achieve an environment that is likely to answer the needs of transmitters of advertisements and information swiftly, and affect a merit because the entire control can be entrusted to the manager of the server.

The invention set forth in Claim 10 is characterized in that in the information transmission system or information transmission method set forth in Claim 1 through Claim 9, the computer on the user side is a device incorporated in household or consumer electric/electronic equipment.

The computer on the user side is a device called the consumer information appliance in which conventional electric/electronic equipment and a computer are merged, which is connected by means of a network. However, it is not necessarily limited to household equipment, and it may be a device installed in a business establishment, factory, public institution, and the like.

Within the device fall, for example, a television set connected to the network, transmitter/receiver for *karaoke* and music, etc., game machine, refrigerator, cooking appliance, security system, composite equipment of home telephone, FAX, copy machine, printer, etc., having a computer incorporated therein, simple information terminal, room heater, bath heater, washer, and so forth.

Also in the device are included a buying and/or ordering system, transportation and/or delivery system, merchandize stock control system, and administrative control system of warehouse in a business establishment, and so forth.

Accompanied with evolution of an information-oriented society, all the appliances are conceivably included in the appliances in this field.

Fig. 6 illustrates an example in which the present invention is used in consumer information appliances and the like.

The computer network connected to each home is connected not only to a conventional personal computer, but also to any type of the consumer information appliances and housing facilities, and the like. These appliances are connected to a personal computer in a case, and in another case, these are connected to an external network through a wired and/or radio communication line.

The invention is also effective in these consumer information appliances, and the followings are concrete embodiments of the invention.

These concrete cases show one example, and the invention is not limited to these.

These consumer information appliances include various household appliances, which are not necessarily limited to home appliances, and they may be any type of appliances that are used in business establishments, factories, and public institutions, and so forth.

For example, they may include an Internet TV in which the Internet and a television are merged, which has a connection function to a computer network; and it discriminates an area from a user address by the user operating a connection button or the like to the network, and displays a weather forecast and news in that area, information of the local authority, information of the local stores and communities, and so forth. They may also include a device that discriminates an area from a user address, displays the broadcasting program tables of broadcast stations in that area, and displays a selected channel; and the device enables the user to access the data of the program that the broadcasting time has finished, to download the data, and to preprogram the video recording, and so forth.

Together with the control function of inventory goods, they may also include a refrigerator, cooking appliance, and system kitchen, etc., that discriminate an area from a user address by the user operating a connection button or the like for accessing the computer network, display bargain sale information of food in that area, and offer proposal of a recipe, and so forth.

They may also include a device that discriminates an area from a user address by the user operating a connection button or the like for accessing the computer network, permits the user to obtain information from pharmacies, hospitals, nursing care establishments, and security system corporations and so forth, and enables the user to issue a message.

They may also include a device that discriminates an area from a user address by the user operating a connection button or the like for accessing the computer network, permits the user to obtain information from a taxi company, forwarding company and so forth, and enables the user to make arrangements.

In the invention set forth in Claim 7, when a file is transmitted to a user by the information transmission system, the file to be transmitted is composed of sound data, animation data, image data, and other data, which is displayed on the computer terminal of the user during reproduction of the animated images or sound data, or the other data through the computer network.

In recent years, ground wave broadcasting stations and so forth broadcast programs of animations and sounds through a corporation's own Web page (Internet TV, Internet radio), and carry out live relay broadcasting of music concerts or events; and thus, the streaming distributions of music and images on the network evolve as a growing trend.

When the broadcasting through a computer network such as the Internet broadcasting is carried out by means of these techniques, even if the contents of the broadcasting program can be accessed commonly to the whole country or commonly to the whole world, the information transmission system according to this invention enables distributions of commercials by area, or presentations of advertisements as a program sponsor by area.

And, a clear charge system thereof can also be established.

In the invention set forth in Claim 8, an information transmission system in a computer network is provided with: a user address acquisition means that, when a user accesses an information transmission source and downloads sound data, animation data, image data, document data, program data, and other data, acquires the IP address of the user automatically in real time, an address classification database by area in which plural IP addresses are classified in advance by area, a file classification database for designating a file to be transmitted among plural files in correspondence with the classification by area, and a file transmission program that judges the classification by area from the IP address of the user acquired by the IP address acquisition means by referring to the address classification database by area, designates the file corresponding to the classification by the file classification database, inserts the file into the data to be downloaded, and transmits the file to the computer of the user.
In this construction, the file to be transmitted is sound data, animation data, image data, or other data, and the setting is made to display the file on the computer terminal of the user during reproduction of the downloaded animated images or sound data, or the other data.

Therefore, when the animation, sound and the other data that are conventionally delivered in a form of package media or print/publication, etc., are distributed in the computer network, the information transmission system according to this invention permits distributions of advertisements and information by area.

The invention set forth in Claim 9 is an information transmission system in a computer network, through which a user receives electronic mails, which includes: an IP address acquisition means that, when the user accessed a server in order to fetch an electronic mail addressed to oneself, acquires an IP address of the user automatically in real time, an IP address classification database in which plural IP addresses are classified in advance by area and the like, an advertisement/information classification database for designating an advertisement and information corresponding to the classification among plural advertisements and information, and an advertisement/information transmission program that judges the classification of the area and the like from the IP address of the user acquired by the IP address acquisition means by referring to the IP address classification database, designates an advertisement and information corresponding to the classification by the advertisement/information classification database, and automatically inserts the advertisement and information into the electronic mail that the user fetches.

The automatic insertion of advertisements and information into an electronic mail is widely spread in recent years; the technique thereof is disclosed, for example, in the Japanese Published Unexamined Patent Application No.Hei 10-320314, "Electronic Mail Advertisement Inserting Device and Recording Medium Recorded with Program for Executing Electronic Mail Advertisement Inserting processing".

Advertisements and the like to be distributed are stored in a database; the advertisement/information transmission program selects an advertisement and the like to be inserted into an electronic mail by referring to the advertisement/information classification database in which are established distribution information classified in advance by area, and reads the selected advertisement from the database, and inserts it into the electronic mail.

As described above, according to the invention, when transmitting advertisements and other information by means of a computer network, the users can be classified by arbitrary areas through the IP addresses thereof, and the advertisements and other information can effectively be transmitted on the basis of the classification.

When there are plural transmitters that want to transmit advertisements and information, the classification of the area and the like can be adjusted in accordance with the individual dispositions of these transmitters, whereby a higher advertising effect or information providing effect can be achieved.

The click through rate of a banner advertisement as well as the response rate to an advertisement by the users can also be raised.

The combinations of information transmission by area in a nationwide advertisements/information provision and a regional advertisements/information provision can be made free and clear, and the advertisement charge system to correspond therewith can also be established.

The information transmission system of the invention allows a business firm that puts an advertisement to efficiently allocate the advertisement expenses.

While the hardware and software on the computer network are in the midst of progress, and various systems are devised for providing advertisements and information on the network, the invention is able to provide a system and method that can suitably be applied to these new technological phases, which performs a fine advertisements/information transmission to match with the circumstances of areas and so forth, and a record medium in which a program for implementing the above is recorded.

According to the invention set forth in Claim 10, applying the invention to the so-called consumer information appliance incorporated into household electric/electronic equipment will make it possible to operate the appliance on the basis of information by area, which brings home life and business activity into swifter, more inexpensive, more convenient, or safer one.

According to the invention set forth in Claim 7, When the broadcasting through a computer network such as the Internet broadcasting is carried out, even if the contents of the broadcasting program can be accessed commonly to the whole country or commonly to the whole world, the distributions of commercials by area become possible, or the presentations of advertisements as a program sponsor by area become possible.

And, a clear advertisement charge system can also be established.

In the pay broadcasting, the attention charge becomes inexpensive owing to advertising revenue by appropriate and effective advertisements, which will contribute to the management of the broadcasting business for a broadcaster.

According to the invention set forth in Claim 8, when a user downloads sound data, animation data, image data, and other data, the distributions of advertisements and information by area become possible, and thereby a clear advertisement charge system can be established.

In the charged data, the downloading charge becomes inexpensive owing to advertising revenue by appropriate and effective advertisements, which will contribute to the management of the business for a data distributor.

According to the invention set forth in Claim 9, when a user receives an electronic mail, the system can transmit advertisements and information corresponding to the area of the user (receiver of the electronic mail), which enables a finer and more effective transmission of advertisements and information.

According to the invention set forth in Claim 15, by using the access analysis means in combination, analyzing that the user of which area classification actually accessed which file for which frequency on the basis of the area that is automatically judged from the IP address, the effectiveness of advertisements and information transmission can be enhanced.

And in addition, the analysis of accesses will effect to examine and review the advertisement charge system and advertisement plan so as to match with the advertising effect.

## Claims

1. An information transmission system in a computer network, comprising:
a user address acquisition means that, when a user accessed an information transmission source, acquires an IP address of the user automatically in real time,
an address classification database by area in which plural IP addresses are classified in advance by area,
a file classification database for designating a file to be transmitted among plural files in correspondence with an address classification by area, and
a file transmission program that judges the classification by area from the IP address of the user acquired by the user address acquisition means by referring to the address classification database by area, designates the file corresponding to the classification by the file classification database, and transmits to a computer of the user.

2. An information transmission system in a computer network, comprising:
a user address acquisition means that, when a user accessed an information transmission source, acquires an IP address of the user automatically in real time,
a storage means that beforehand stores plural files to be transmitted to a computer of the user,
an address classification database by area in which plural IP addresses are classified in advance by area,
a file classification database for designating a file to be transmitted among plural files in correspondence with an address classification by area, and
a file transmission program that judges the classification by area from the IP address of the user acquired by the user address acquisition means by referring to the address classification database by area, designates the file corresponding to the classification by the file classification database, and transmits to the computer of the user.

3. An information transmission system set forth in Claim 1, wherein the file transmitted to the user in correspondence with the classification by area acquired from the IP address of the user is displayed on part of a browser screen thereof, when a WWW page of the information transmission source that the user accessed is displayed on the computer of the user.

4. An information transmission system set forth in Claim 2, wherein the file transmitted to the user in correspondence with the classification by area acquired from the IP address of the user is displayed on part of a browser screen thereof, when a WWW page of the information transmission source that the user accessed is displayed on the computer of the user.

5. An information transmission system set forth in Claim 1 through Claim 4, wherein the file to be transmitted to the computer of the user goes through the following processing of:
judging the classification by area from the IP address of the user acquired by the IP address acquisition means, referring to the IP address classification database by area,
judging the file corresponding to the classification by area by the file classification database, and
designating to refer to an Internet provider that the user uses, a domain name of the user, a domain type of the user, a distinction of radio communication or wired communication, a relay station of the radio communication, information such as the ID that the user inputs, a browser software used, an OS used, an electronic authentication of the user, and even a user information database that stores the other information.

6. An information transmission method in a computer network, comprising:
a user address acquisition means that, when a user accessed an information transmission source, acquires an IP address of the user automatically in real time,
an address classification database by area in which plural IP addresses are classified in advance by area,
a file classification database for designating a file to be transmitted among plural files in correspondence with a classification by area, and
a file transmission program that judges the classification by area from the IP address of the user acquired by the user address acquisition means by referring to the address classification database by area, designates the file corresponding to the classification by the file classification database, and transmits to a computer of the user.

7. An information transmission system in a computer network, comprising:
a user address acquisition means that, when a user accessed an information transmission source, acquires an IP address of the user automatically in real time,
an address classification database by area in which plural IP addresses are classified in advance by area,
a file classification database for designating a file to be transmitted among plural files in correspondence with a classification by area, and
a file transmission program that judges the classification by area from the IP address of the user acquired by the IP address acquisition means by referring to the address classification database by area, designates the file corresponding to the classification by the file classification database, and transmits to a computer of the user,
wherein the file to be transmitted is composed of sound data, animation data, image data, and other data, which is displayed on the computer terminal of the user during reproduction of the animated images or sound data, or the other data through the computer network.

8. An information transmission system in a computer network, comprising:
a user address acquisition means that, when a user accesses an information transmission source and downloads sound data, animation data, image data, document data, program data, or other data, acquires an IP address of the user automatically in real time,
an address classification database by area in which plural IP addresses are classified in advance by area,
a file classification database for designating a file to be transmitted among plural files in correspondence with a classification by area, and
a file transmission program that judges the classification by area from the IP address of the user acquired by the IP address acquisition means by referring to the address classification database by area, designates the file corresponding to the classification by the file classification database, inserts into the data to be downloaded, and transmits to a computer of the user,
wherein the file to be transmitted is composed of sound data, animation data, image data, and other data, which is displayed on the computer terminal of the user during reproduction of the downloaded animated images or sound data, or the other data.

9. An information transmission system set forth in Claim 2 or Claim 4, wherein the plural files transmitted to the computer of the user can be stored in the storage means on a server, without a transmitter of advertisements or information troubling a manager of the server.

10. An information transmission system set forth in Claim 1 through Claim 5, or Claim 7 through Claim 9, wherein the computer on the user side is a device incorporated in electric/electronic equipment such as a consumer information appliance.

11. An information transmission system in which users transmit and receive electronic mails in a computer network, comprising:
a user address acquisition means that, when a user accessed a server in order to fetch an electronic mail addressed to oneself, acquires an IP address of the user automatically in real time,
an address classification database by area in which plural IP addresses are classified in advance by area,
an advertisement/information classification database for designating an advertisement and information corresponding to a classification by area among plural advertisements and information, and
an advertisement/information transmission program that judges the classification by area from the IP address of the user acquired by the address acquisition means by referring to the address classification database by area, designates an advertisement and information corresponding to the classification by the advertisement/information classification database, and automatically inserts into the electronic mail that the user fetches.

12. A computer program storage medium, in a computer network that includes:
an user address acquisition means that, when a user accessed an information transmission source on the computer network, acquires an IP address of the user automatically in real time,
an address classification database by area in which plural IP addresses are classified in advance by area, and
a file classification database for designating a file to be transmitted among plural files in correspondence with a classification by area,
wherein a file transmission program is stored which judges the classification by area from the IP address of the user acquired by the user address acquisition means by referring to the address classification database by area, designates the file corresponding to the classification by the file classification database, and transmits to a computer of the user.

13. An information transmission system set forth in Claim 1 through Claim 5 or Claim 7 through Claim 10, in which the user address acquisition means that acquires the address of the user automatically in real time is a means that acquires information to identify a base station or a relay station of a portable telephone, PHS, or the other radio communication of the user, which comprises:
an address classification database by area in which the plural identification information are classified in advance by area,
a file classification database for designating a file to be transmitted among plural files in correspondence with a classification by area, and
a file transmission program that judges the classification by area from the identification information by area of the user acquired by the user address acquisition means by referring to the address classification database by area, designates the file corresponding to the classification by the file classification database, and transmits to a computer of the user.

14. An information transmission system set forth in Claim 1 through Claim 5, Claim 7 through Claim 11, or Claim 13, in which:
the computer network is constructed by any other method than a method that identifies a server on the network by the IP address in case of the TCP/IP being served as a communication protocol,
the user address that acquires the address of a user automatically in real time is identification information that identifies the server on the network, in the same manner as the IP address in case of the TCP/IP being served as the communication protocol,
which comprises:
a user address acquisition means that, when the user accessed an information transmission source on the computer network, acquires the address of the user automatically in real time,
an address classification database by area in which the plural identification information are classified in advance by area,
a file classification database for designating a file to be transmitted among plural files in correspondence with an address classification by area, and
a file transmission program that judges the classification by area from the identification information by area of the user acquired by the user address acquisition means by referring to the address classification database by area, designates the file corresponding to the classification by the file classification database, and transmits to a computer of the user.

15. An information transmission system set forth in Claim 1 through Claim 5 or Claim 7 through Claim 10, comprising:
a user address acquisition means that, when a user accessed an information transmission source on the computer network, acquires the IP address of the user automatically in real time,
an address classification database by area in which plural IP addresses are classified in advance by area, and a file classification database for designating a file to be transmitted among plural files in correspondence with an address classification by area,
a file transmission program that judges the classification by area from the IP address of the user acquired by the user address acquisition means by referring to the address classification database by area, designates the file corresponding to the classification by the file classification database, and transmits to a computer of the user,
and a means that, when the user accessed the information source, analyzes accessed conditions by the IP addresses of the users, and stores analyzed information.
